# DEMANDE DE BREVET EUROPEEN

(11) **EP 1 013 392 A1**
(43) Date de publication de la demande: **28.06.2000**
(21) Numéro de dépôt: 99420252.1
(22) Date de dépôt: 21.12.1999
(51) Int. Cl.: B29C 45/14, A47B 3/02

(54) **Procédé et installation de moulage d'une pièce sur un support et élément de mobilier comprenant un tel support**

(30) Priorité: 22.12.1998 FR 9816470
(71) Demandeur: Etablissements Lallemand, 01430 Maillat (FR)
(72) Inventeur: Lallemand, Marc, 01430 Maillat (FR); Lallemand, Abel, 01430 Maillat (FR)
(74) Mandataire: Myon, Gérard Jean-Pierre

(57) **Abrégé**

Selon ce procédé :
- on utilise un moule (16) comportant au moins une ouverture débouchante pour la ou chaque pièce ;
- on place le support (4) dans une position d'appui contre ledit moule (16), au voisinage de la ou chaque ouverture, de manière à former, avec une face d'appui (4a) du support et des parois de l'ouverture, une cavité de moulage (37) pour la ou chaque pièce ;
- on réalise, dans le support (4) placé dans ladite position d'appui, au moins un trou borgne (50) débouchant dans la cavité (37), et
- on injecte une matière moulable dans la ou chaque cavité (37) et le ou chaque trou borgne (50).

Ce procédé garantit un moulage rapide et simple et permet de s'affranchir de la formation de copeaux provenant du support.

## Description

La présente invention concerne un procédé et une installation de moulage d'au moins une pièce sur un support, et un élément de mobilier comprenant un tel support.

Le moulage de pièces rapportées sur un support intervient notamment, mais non exclusivement, dans la réalisation d'éléments de mobilier.

Un élément de mobilier visé par l'invention est par exemple une table, notamment de camping, comportant un plateau qui constitue un support pour des pièces moulées d'articulation et/ou de verrouillage des différents éléments constitutifs du piétement de cette table. De manière connue, on réalise chaque pièce dans un moule séparé correspondant, puis on fixe ces pièces par vissage sur le plateau.

Ce procédé de fabrication présente cependant certains inconvénients. Plusieurs opérations successives de moulage, puis de vissage, sont nécessaires, qui impliquent un temps de fabrication relativement long. De plus, dans le cas d'un plateau réalisé en bois, les différents vissages entraînent la production de copeaux, ce qui contribue à polluer l'atmosphère de l'unité de production.

Afin de pallier ces différents inconvénients, l'invention se propose de mettre en oeuvre un procédé permettant de mouler une pièce sur un support de façon simple et rapide, tout en garantissant un assujettissement fiable de cette pièce sur le support considéré.

A cet effet, l'invention a pour objet un procédé de moulage d'au moins une pièce sur un support, notamment un plateau de table, caractérisé en ce qu'il comprend les étapes suivantes :
- on utilise un moule comportant au moins une ouverture débouchante pour la ou chaque pièce ;
- on place le support dans une position d'appui contre ledit moule, au voisinage de la ou chaque ouverture, de manière à former, avec une face d'appui du support et des parois de l'ouverture, une cavité de moulage pour la ou chaque pièce ;
- on réalise, dans le support placé dans ladite position d'appui, au moins un trou borgne débouchant dans la cavité, et
- on injecte une matière moulable dans la ou chaque cavité et le ou chaque trou borgne.

Selon d'autres caractéristiques de l'invention :
- on dispose, dans une partie du moule opposée à la face d'appui par rapport à ladite cavité, au moins un organe mobile en translation, on forme le ou chaque trou borgne au moyen du ou de chaque organe mobile et on rétracte le ou chaque organe dans ladite partie du moule avant l'injection de la matière moulable ;
- on rétracte le ou chaque organe mobile, de manière à former une paroi de ladite cavité ;
- on réalise l'ensemble des trous borgnes de manière simultanée ;
- on réalise le ou chaque trou borgne par emboutissage ;
- on éjecte la ou chaque pièce moulée par l'intermédiaire du ou de chaque organe mobile.

L'invention a également pour objet une installation de fabrication de moulage d'au moins une pièce sur un support, notamment un plateau de table, caractérisée en ce qu'elle comprend :
- un moule pourvu d'une surface de butée pour une face d'appui dudit support, ladite surface de butée étant creusée d'au moins une ouverture débouchante pour la ou chaque pièce, propre à former, avec ladite face d'appui et des parois de l'ouverture, une cavité de moulage pour la ou chaque pièce ;
- des moyens de solidarisation du moule dans une position d'appui contre ledit support ;
- des moyens de formation, dans ledit support placé dans la position d'appui, d'au moins un trou borgne débouchant dans ladite cavité, et
- des moyens d'injection d'une matière moulable dans chaque cavité et chaque trou borgne.

Selon d'autres caractéristiques de l'invention :
- le moule comporte au moins un insert amovible dont des parois définissent la ou chaque ouverture débouchante ;
- les moyens de formation du ou de chaque trou borgne comprennent au moins un organe disposé dans ledit moule, le ou chaque organe étant mobile entre une position rétractée dans laquelle il forme une paroi de la cavité et une position avancée dans laquelle il pénètre dans ledit support ;
- le ou chaque organe mobile est une tige d'emboutissage à extrémité en biseau ;
- plusieurs organes mobiles appartiennent à un unique ensemble mobile déplaçable par des moyens communs.

L'invention a enfin pour objet un élément de mobilier, notamment une table, comportant un support, notamment un plateau, et au moins une pièce moulée rapportée sur ce support, caractérisé en ce que la ou chaque pièce moulée est fixée sur le support par l'intermédiaire d'au moins un téton venu de matière avec cette pièce moulée, ce téton pénétrant dans le support.

L'invention va être décrite ci-dessous, en référence aux dessins annexés, donnés uniquement à titre d'exemples non limitatifs et dans lesquels :
- la figure 1 est une vue en perspective d'un élément de mobilier conforme à l'invention ;
- la figure 2 est une vue en coupe d'une installation de moulage conforme à l'invention, permettant la fabrication de l'élément de mobilier de la figure 1 ;
- les figures 3 à 7 sont des coupes partielles de l'installation représentée à la figure 2, illustrant des phases successives du procédé de réalisation de l'élément de mobilier de l'invention.

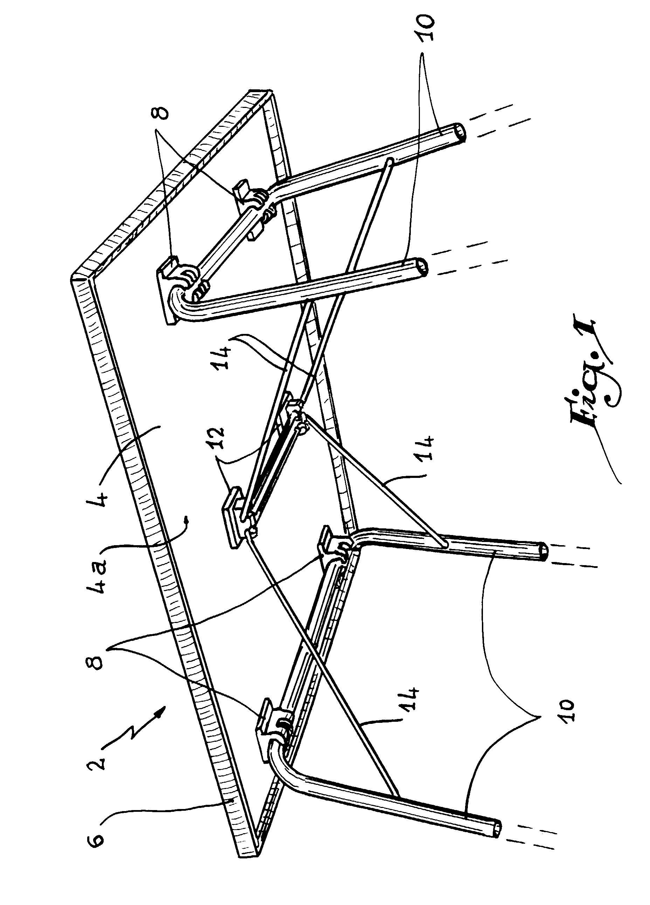

La figure 1 représente un élément de mobilier conforme à l'invention, qui est une table de camping désignée dans son ensemble par la référence 2. Cette table comprend un plateau 4 entouré par une bordure périphérique 6, ainsi que des pièces moulées, rapportées sur le plateau 4 et destinées à assurer l'articulation et le blocage des différents éléments constitutifs du piétement de la table. Le plateau 4 forme support pour ces pièces moulées.

De façon plus précise, ces pièces moulées comprennent quatre paliers 8 à l'intérieur desquels peuvent être montés à pivotement, par encliquetage élastique, deux pieds tubulaires 10 en forme de U. Deux attaches 12, fixées dans une zone centrale du plateau, assurent l'assujettissement, par encliquetage élastique, de tiges de blocage 14 permettant de maintenir les pieds 10 dans une position d'utilisation de la table 2. La fixation sur le plateau 4 de ces différentes pièces moulés 8, 12 va être décrite plus en détail dans ce qui suit.

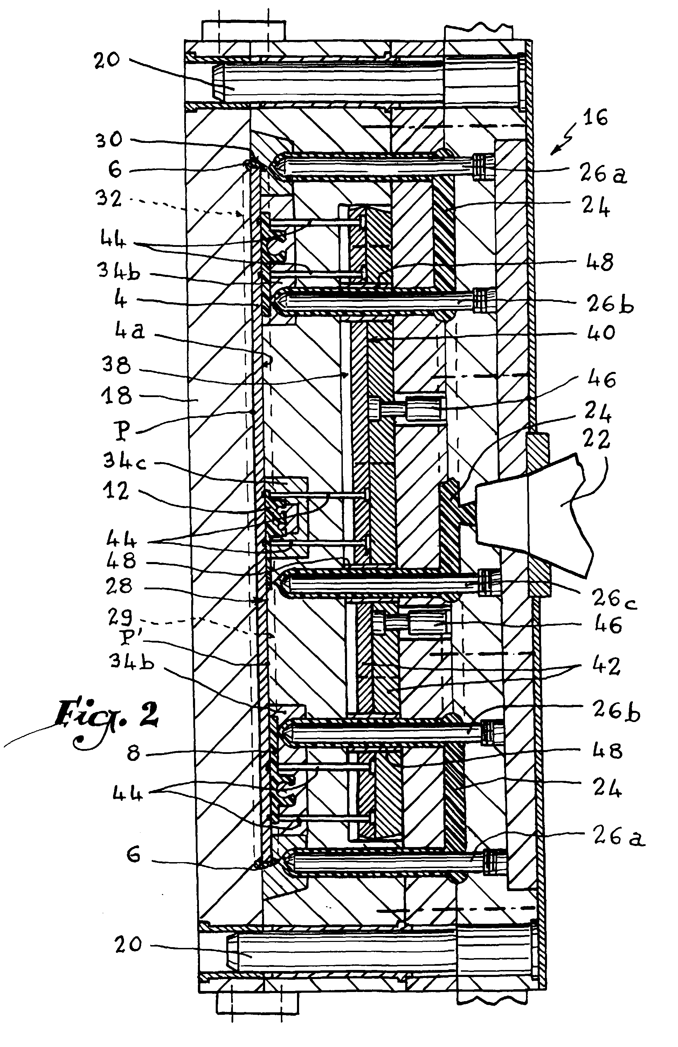

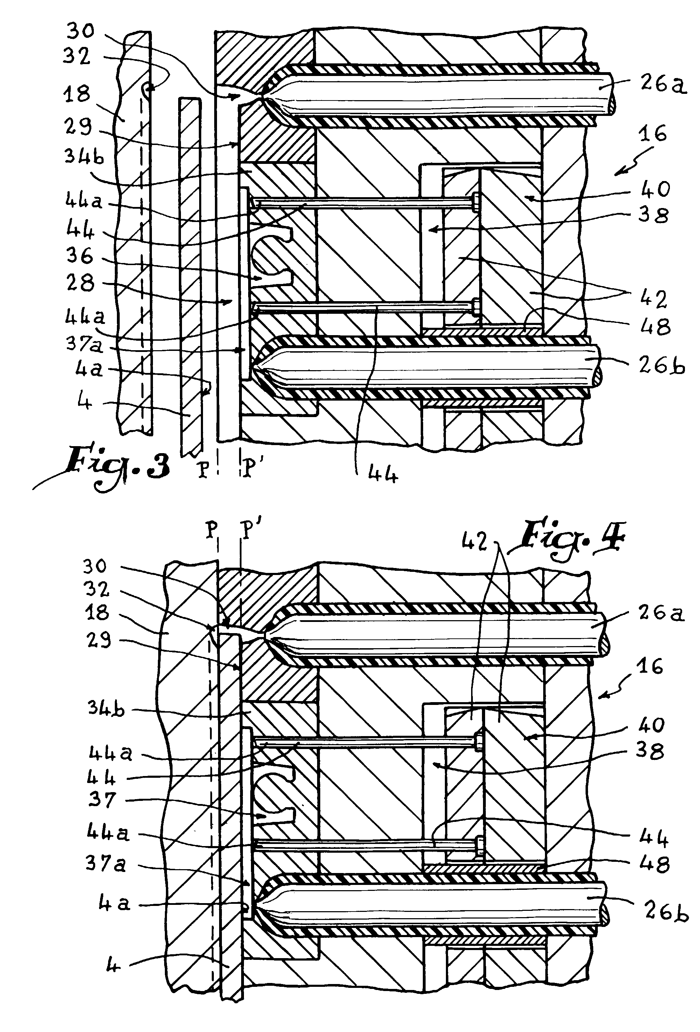

L'installation permettant la fabrication de la table 2 décrite ci-dessus est représentée sensiblement dans son ensemble à la figure 2, et partiellement aux figures 3 à 7.

Cette installation comprend une partie fixe de moulage, désignée dans son ensemble par la référence 16, ainsi qu'une partie mobile désignée dans son ensemble par la référence 18, dont les déplacements sont guidés par l'intermédiaire de colonnes 20. En fin de course de la partie mobile 18, cette dernière prend appui contre la partie fixe 16 selon un plan de joint P.

La partie fixe 16 est pourvue de moyens connus d'alimentation en matière plastique comprenant un réservoir 22 en communication avec une canalisation périphérique 24, partiellement représentée et qui assure l'alimentation de cinq buses d'injection 26. De manière plus précise, deux buses 26a sont prévues pour la réalisation, de manière classique, de la bordure périphérique 6. De plus, quatre buses supplémentaires, dont seules deux 26b ont été représentées, sont prévues pour la réalisation des paliers 8, alors que deux buses supplémentaires, dont une seule 26c a été représentée, sont destinées à la fabrication des attaches 12.

Comme le montre plus particulièrement la figure 3, la partie fixe 16 est creusée, à son extrémité adjacente à la partie mobile 18, d'une échancrure 28 dont le fond 29 sensiblement plat, qui s'étend selon un plan P' sensiblement parallèle au plan de joint P, forme butée pour une face 4a d'appui du plateau 4. Les dimensions de cette échancrure 28 sont telles que la face du plateau 4 opposée au fond de cette échancrure s'étend, une fois le plateau en appui, sensiblement selon le plan de joint P.

Une encoche périphérique 30 est ménagée dans la partie fixe 16 et permet, de manière connue, le moulage de la bordure 6 par coopération avec une entaille périphérique 32 ménagée en regard de l'encoche 30, dans la partie mobile 18.

La partie fixe 16 reçoit, au voisinage du fond de l'échancrure 28, des inserts amovibles 34, destinés au moulage des paliers 8 et des attaches 12. Chaque insert 34 est fixé à la partie fixe 16 par exemple par vissage. De manière plus précise, il est prévu quatre inserts, dont seulement deux 34b ont été représentés, pour les paliers 8 ainsi que deux inserts, dont un seul 34c a été représenté, pour les attaches 12. Chaque insert 34 est creusé d'une ouverture 36 débouchant en direction de l'échancrure 28 de la partie fixe 16.

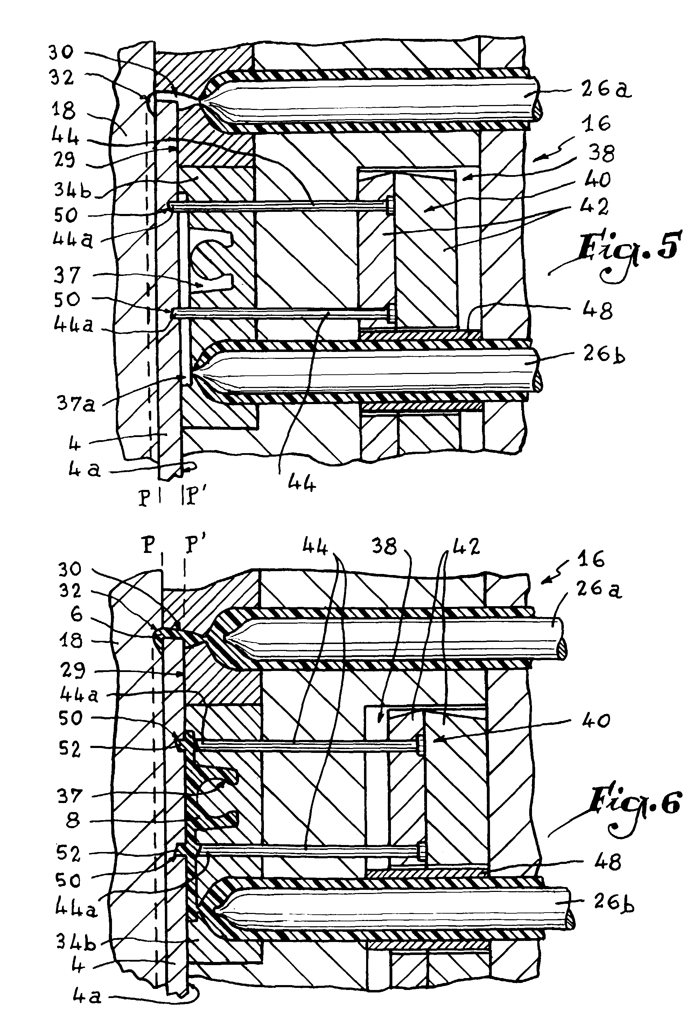

La forme de chaque ouverture 36 est telle que cette dernière définit une cavité de moulage 37 avec la surface du plateau 4, lorsque ce dernier prend appui contre le fond 29 de l'échancrure 28. Comme le montre en particulier la figure 4, chaque cavité comprend une zone périphérique 37a de faible épaisseur, destinée à l'arrivée d'une buse d'injection 26b correspondante et de broches d'emboutissage du plateau, comme cela sera explicité dans ce qui suit.

La partie fixe 16 délimite, dans sa partie médiane, un logement 38 de réception d'un ensemble mobile 40, déplaçable en direction de la partie mobile 18. Cet ensemble mobile comporte deux plaques 42 superposées, retenant des tiges ou broches 44 s'étendant en direction des ouvertures 36.

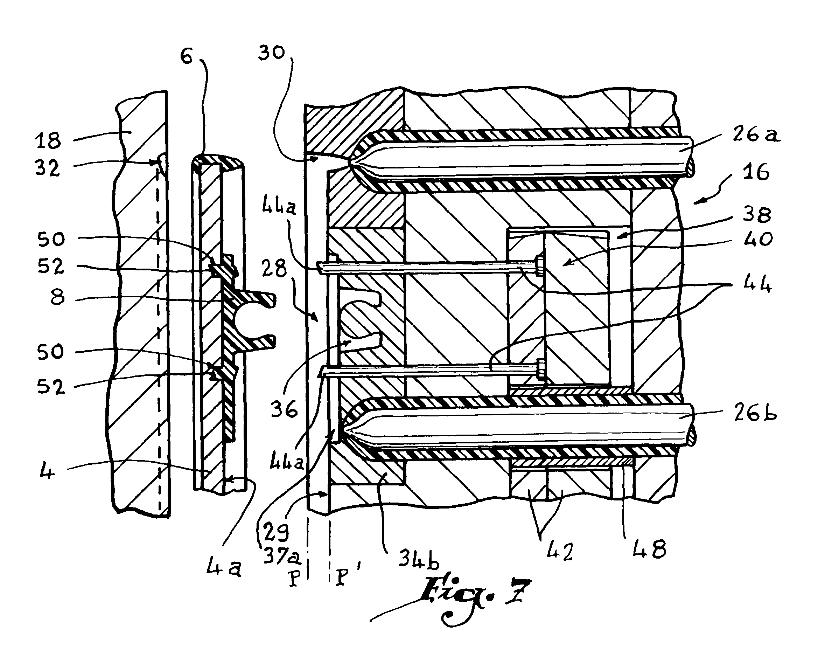

L'ensemble 40 est mobile au sein du logement 38, sous l'action de vérins 46, entre une position rétractée, représentée notamment aux figures 2 et 3, et une position avancée, représentée notamment à la figure 5. Cet ensemble mobile étant astreint à coulisser au voisinage des buses d'injection 26, des fourreaux 48 de protection thermique, réalisés par exemple en laiton, sont interposés entre chaque buse 26 et les parois en regard de l'ensemble mobile 40.

Chaque broche 44 est montée coulissante, par rapport à la partie fixe 16 et à l'insert 34 adjacent. Dans la position rétractée de l'ensemble mobile, chaque broche affleure sensiblement le fond de l'ouverture correspondante 36, alors que, dans la position avancée de cet ensemble 40, l'extrémité de chaque broche s'étend entre les plans P et P', comme le montre en particulier la figure 5.

Il est à noter que l'extrémité 44a de chaque broche 44, opposée aux plaques 42, est chanfreinée et constitue la face d'attaque des broches, comme cela sera explicité dans ce qui suit. Chaque insert 34 est muni de quatre broches, dont seulement deux sont représentées sur l'ensemble des figures.

Le procédé de fabrication de la table 2 va être décrit dans ce qui suit, en faisant référence aux figures 3 à 7.

On amène tout d'abord en butée le plateau 4 contre le fond 29 de l'échancrure 28. La face de ce plateau, adjacente à la partie fixe 16, s'étend selon le plan P' alors que l'autre face de ce plateau s'étend selon le plan de joint P. On rapproche ensuite la partie mobile 18 de la partie fixe, de manière à immobiliser le plateau 4 entre ces deux parties 16, 18 (figure 4). La face du plateau, adjacente à la partie fixe 16, forme alors, avec les inserts 34, les cavités 37 de moulage. L'ensemble mobile 40 se trouve dans sa position rétractée.

Puis, (figure 5), on déplace l'ensemble mobile 40 de manière à l'amener dans sa position avancée, dans laquelle l'extrémité 44a des broches 44 s'étend entre les plans P et P', de manière à former des trous borgnes 50 dans la paroi en regard du plateau. Puis, on ramène l'ensemble mobile 40 dans sa position rétractée.

La phase suivante du procédé, illustrée à la figure 6, est une étape de moulage, dans laquelle on injecte de la matière plastique par l'intermédiaire des buses d'injection 26. La figure 6 illustre uniquement le moulage de la bordure périphérique 6 par l'intermédiaire de la buse 26a, ainsi que le moulage d'un des paliers 8 par l'intermédiaire d'une buse 26b. Il convient de noter que l'ensemble des organes rapportés 8, 12 sont moulés simultanément avec cette bordure 6. La matière plastique s'écoule dans la cavité 37, définie par les parois de l'ouverture 36 et les extrémités 44a des broches 44. Cette matière plastique remplit également les trous borgnes 50 formés par les broches 44 pour constituer des tétons 52.

Dans une phase ultime du procédé, représentée à la figure 7, on retire de la partie fixe 16 le plateau 4 pourvu de sa bordure 6 et de ses pièces rapportées 8, 12, après un temps approprié pour le refroidissement de la matière plastique injectée. A cet effet, la partie mobile 18 est équipée de ventouses non représentées permettant d'assujettir le plateau 4. Il est à noter que cette opération de retrait du plateau 4 s'accompagne d'un déplacement de l'ensemble mobile 40 vers sa position avancée, de sorte que les broches 44 assurent un rôle d'éjecteurs des organes rapportés 8, 12. On désolidarise ensuite le plateau 4 de la partie mobile 18.

Dans l'exemple décrit et représenté, il a été uniquement fait mention de la fixation d'éléments d'articulation sur un plateau de table. L'invention trouve également son application par exemple à la fixation de glissières sur des tiroirs, d'éléments de support sur des tableaux muraux ou encore de charnières sur des abattants.

L'invention permet de réaliser les objectifs précédemment mentionnés. Le procédé de l'invention induit un temps de fabrication notablement plus court que dans l'art antérieur. En effet, dans l'invention, les phases de moulage et de fixation de l'ensemble des pièces rapportées sont réalisées au cours d'une même étape. De plus, conformément à l'invention, il est possible de mettre en oeuvre cette unique étape de moulage et de fixation en même temps qu'une opération de moulage classique, telle que la réalisation d'une bordure périphérique.

La formation par emboutissage des trous borgnes permettant la fixation de la pièce rapportée est également avantageuse, dans la mesure où elle permet de s'affranchir de la formation de copeaux, inhérente au procédé de l'art antérieur.

L'utilisation d'inserts amovibles définissant, avec la pièce de structure, des cavités de moulage correspondantes, est également avantageuse. En effet, une telle disposition permet de changer aisément les inserts selon la conformation que l'on désire conférer à la pièce rapportée, sans avoir à remplacer la partie principale de l'installation.

L'emploi de moyens de formation des trous borgnes, mobiles entre des positions rétractée et avancée est également avantageux. En effet, ces moyens assument une fonction multiple dans la mesure où, dans leur position rétractée, ils forment une partie de la cavité de moulage et où, dans leur position avancée, ils assurent dans un premier temps la formation des trous borgnes, puis l'éjection des pièces moulées.

## Revendications

1. Procédé de moulage d'au moins une pièce (8, 12) sur un support, notamment un plateau (4) de table (2), caractérisé en ce qu'il comprend les étapes suivantes :
- on utilise un moule (16) comportant au moins une ouverture débouchante (36) pour la ou chaque pièce (8, 12) ;
- on place le support (4) dans une position d'appui contre ledit moule (16), au voisinage de la ou chaque ouverture (36), de manière à former, avec une face d'appui (4a) du support et des parois de l'ouverture (36), une cavité de moulage (37) pour la ou chaque pièce (8, 12) ;
- on réalise, dans le support (4) placé dans ladite position d'appui, au moins un trou borgne (50) débouchant dans la cavité (37), et
- on injecte une matière moulable dans la ou chaque cavité (37) et le ou chaque trou borgne (50).

2. Procédé de moulage suivant la revendication 1, caractérisé en ce qu'on dispose, dans une partie du moule opposée à la face d'appui (4a) par rapport à ladite cavité (37), au moins un organe mobile (44) en translation, on forme le ou chaque trou borgne (50) au moyen du ou de chaque organe mobile (44) et on rétracte le ou chaque organe dans ladite partie du moule avant l'injection de la matière moulable.

3. Procédé de moulage suivant la revendication 2, caractérisé en ce qu'on rétracte le ou chaque organe mobile (44), de manière à former une paroi de ladite cavité (37).

4. Procédé de moulage suivant l'une des revendications 1 à 3, caractérisé en ce qu'on réalise l'ensemble des trous borgnes (50) de manière simultanée.

5. Procédé de moulage suivant l'une quelconque des revendications 1 à 4, caractérisé en ce qu'on réalise le ou chaque trou borgne (50) par emboutissage.

6. Procédé de moulage suivant l'une des revendications 2 à 5, caractérisé en ce qu'on éjecte la ou chaque pièce moulée (8, 12) par l'intermédiaire du ou de chaque organe mobile (44).

7. Installation de moulage d'au moins une pièce (8, 12) sur un support, notamment un plateau (4) de table (2), caractérisée en ce qu'elle comprend :
- un moule (16) pourvu d'une surface de butée (29) pour une face d'appui (4a) dudit support (4), ladite surface de butée (29) étant creusée d'au moins une ouverture débouchante (36) pour la ou chaque pièce (8, 12), propre à former, avec ladite face d'appui et des parois de l'ouverture (36), une cavité de moulage (37) pour la ou chaque pièce (8, 12) ;
- des moyens (18) de solidarisation du moule (16) dans une position d'appui contre ledit support (4) ;
- des moyens (44) de formation, dans ledit support placé dans la position d'appui, d'au moins un trou borgne (50) débouchant dans ladite cavité (37), et
- des moyens (26) d'injection d'une matière moulable dans chaque cavité (37) et chaque trou borgne (50).

8. Installation de fabrication suivant la revendication 7, caractérisé en ce que ledit moule (16) comporte au moins un insert amovible (34) dont des parois définissent la ou chaque ouverture débouchante (36).

9. Installation de fabrication suivant l'une quelconque des revendications 7 ou 8, caractérisée en ce que les moyens (44) de formation du ou de chaque trou borgne comprennent au moins un organe (44) disposé dans ledit moule (16), le ou chaque organe (44) étant mobile entre une position rétractée dans laquelle il forme une paroi de la cavité (37) et une position avancée dans laquelle il pénètre dans ledit support (4).

10. Installation de fabrication suivant la revendication 9, caractérisée en ce que le ou chaque organe mobile (44) est une tige d'emboutissage à extrémité (44a) en biseau.

11. Installation de fabrication suivant l'une des revendications 9 ou 10, caractérisé en ce que plusieurs organes mobiles (44) appartiennent à un unique ensemble mobile (40) déplaçable par des moyens communs (46).

12. Elément de mobilier, notamment table (2), comportant un support, notamment un plateau (4), et au moins une pièce moulée (8, 12) rapportée sur ledit support, caractérisé en ce que la ou chaque pièce moulée (8, 12) est fixée sur ledit support (4) par au moins un téton (52) venu de matière avec ladite pièce moulée et pénétrant dans ledit support (4).
